# EUROPEAN PATENT SPECIFICATION

(11) **EP 2 154 422 B1**
(45) Date of publication and mention of the grant of the patent: **15.06.2011**
(21) Application number: 08711669.5
(22) Date of filing: 20.02.2008
(51) Int. Cl.: F21S 8/04, F21S 2/00, F21V 23/00, G02F 1/13357, F21Y 101/02, F21V 29/00

(54) **ILLUMINATION DEVICE AND DISPLAY DEVICE USING THE SAME**
BELEUCHTUNGSEINRICHTUNG UND DIESE VERWENDENDE ANZEIGEVORRICHTUNG
DISPOSITIF D'ILLUMINATION ET DISPOSITIF D'AFFICHAGE UTILISANT CELUI-CI

(30) Priority: 27.07.2007 JP 2007196095
(43) Date of publication of application: 17.02.2010
(73) Proprietor: Sharp Kabushiki Kaisha, Osaka-shi, Osaka 545-8522 (JP)
(72) Inventor: TOMIYOSHI, Akira, Osaka 545-8522 (JP)
(74) Representative: Müller-Boré & Partner Patentanwälte
(86) International application number: PCT/JP2008/052863
(87) International publication number: WO 2009/016853

(56) References cited:
- JP-A- 2002 163 912
- JP-A- 2006 301 209
- JP-A- 2007 027 114
- JP-A- 2007 027 745
- JP-A- 2007 066 879
- JP-A- 2007 066 879
- JP-A- 2007 087 662
- JP-A- 2007 087 662
- JP-A- 2007 109 447
- US-A1- 2005 265 051
- US-A1- 2006 289 201

## Description

### Technical Field

The present invention relates to an illumination device used for a backlight or the like, and a display device using the illumination device.

### Background Art

Recently, for example, a liquid crystal display device has been used widely in a liquid crystal television, a monitor, a mobile telephone, and the like as a flat panel display having advantages such as smaller thinness and lighter weight compared with those of conventional Braun tubes. Such a liquid crystal display device includes an illumination device emitting light and a liquid crystal panel displaying a desired image by playing a role as a shutter with respect to light from a light source provided in the illumination device.

Furthermore, as the above-mentioned illumination device, an edge-light type device or a direct-type device has been provided, in which a linear light source composed of a cold cathode-ray tube or a hot cathode-ray tube is placed on the side of or below a liquid crystal panel. However, the cold cathode-ray tube and the like as described above contain mercury, so that it used to be difficult to recycle the cold cathode-ray tube to be discarded. Then, an illumination device using a light-emitting diode (LED) without using mercury as a light source has been proposed (see, e.g., JP 2005-316337 A and JP 2005-317480 A).

The conventional illumination device as described in the publication of JP 2005-316337 A or JP 2005-317480 A is provided with a light-emitting block including a wiring board and a plurality of light-emitting diodes mounted linearly on the wiring board. Such a conventional illumination device is able to display an image of high luminance with a large liquid crystal panel by placing a plurality of the light-emitting blocks in the longitudinal and transverse directions respectively.

US 2006/0289201 A1 discloses a backlight assembly for a display device, where the backlight assembly includes a plurality of light sources and a plurality of metal core printed circuit boards on which the light sources are mounted. The metal core printed circuit boards are directly connected to each other in predetermined regions.

US 2005/0265051 A1 describes a lighting unit with a plurality of lighting modules arranged in a flat-surface-like manner. A plurality of electrical connectors are positioned in each lighting module in such a manner that the electrical connectors face each side of each lighting module.

JP 2007 066879 A discloses a backlight device including a case, a base substrate installed inside the case, and a plurality of LED units modularized and mounted on the base plate. In case a part of the plurality of LED units mounted on the base plate is in trouble, a local replacement of an LED unit is possible.

JP 2007 087662 A discloses a light source unit formed by mounting a plurality of light emitting diode lamps on an element mounting board. The light emitting diode lamp contains a plurality of light emitting diode elements for irradiating white light to an object to be lighted, a plurality of the element mounting boards are arranged at positions adjacent to one another on the same plane, and two element mounting boards adjacent to one another included therein are connected disconnectably to each other. Consequently, modification can be conducted easily in design of a liquid crystal display unit.

### Disclosure of Invention

### Problem to be Solved by the Invention

However, in the conventional illumination device as described above, an electric wiring such as a signal line and an electric power line is formed for each of the plural light-emitting blocks (light source substrates). Therefore, in a case of increasing the number of the light-emitting diodes (light-emitting elements) to be placed for the purpose of increasing the screen surface area or for raising the luminance in a liquid crystal display device, it is required also to increase the number of the light-emitting blocks to be placed, and thus more labor and time are required for providing (wiring) the electric wiring. Moreover in the conventional illumination device, it is difficult to reduce the install space for extending the electric wiring or the like, and thus it is difficult to prevent the illumination device from having a complicated structure and being upsized.

Specifically, the light-emitting diode in general is mounted on the wiring board of the light-emitting block by soldering. The above-mentioned wiring board formed of a synthetic resin such as an epoxy resin generally has sides each having a length of about 60 cm at most, but a wiring board having longer sides cannot be applied to a practical use when taking the cost or the like into consideration. As a result, in a case of increasing the number of the light-emitting diodes (light-emitting elements) to be placed in the conventional illumination device, the number of the light-emitting blocks to be placed also should be increased, and thus it is impossible to reduce the labor in providing the electric wiring. Also in the conventional illumination device, the install space for providing the electric wiring is increased necessarily as a result of the increase in the number of the light-emitting blocks to be placed, and thus it is difficult to prevent the illumination device from having a complicated structure and being upsized.

Therefore, with the foregoing in mind, it is an object of the present invention to provide a compact illumination device with a simple structure serving to reduce the labor for providing an electric wiring even when increasing the number of the light-emitting elements to be placed, and also a display device using the illumination device.

### Means for Solving Problem

For achieving the above-described object, an illumination device according to the present invention includes the features of appended claim 1.

In the thus configured illumination device, a plurality of light source substrates each having a plurality of light-emitting elements placed on a mounting surface are provided in a state where adjacent light source substrates are connected electrically to each other. Therefore, it is possible to turn on and drive the respective light-emitting elements on all of the light source substrates by supplying electric power or outputting a signal for example to one of the light source substrates. Thus, even when increasing the number of required light source substrates in accordance with the increase in the number of the light-emitting elements to be placed, there is no necessity of providing an electric wiring such as a signal line or an electric power line for the respective light source substrates, unlike the above-described conventional example. As a result, the operations for providing the electric wiring can be simplified, and the install space for arranging the electric wiring can be minimized so as to provide a compact illumination device with a simple structure.

In the above-described illumination device, the plural light-emitting elements can be placed on the mounting surface of the light source substrate along a predetermined direction and at a predetermined spacing.

In this case, it is possible to prevent easily a luminance unevenness in the light emitted from the illumination device, thereby improving easily the light emission quality of the illumination device.

In the illumination device, terminal portions to be connected electrically to the light-emitting elements are provided at two end portions parallel to each other of the light source substrate.

Thus, by connecting the terminal portion provided at the end portion of one of the light source substrates and the terminal portion provided at the end portion of the other light source substrate, these light source substrates can be connected electrically to each other.

Moreover, the illumination device includes a chassis containing the light source substrate; the two terminal portions are provided respectively at the two end portions on the rear face opposite to the mounting surface of the light source substrate; and an electric connection member to be connected electrically to the terminal portions placed on the light source substrate is provided in the chassis.

Thus, by disposing the respective terminal portions of the adjacent two light source substrates with respect to the electric connection member, these light source substrates can be connected electrically to each other, thereby configuring an illumination device that can be assembled easily. Furthermore, since an electric connection member provided in a chassis is used, each of the light source substrates can be positioned easily.

In the illumination device, the electric connection member is attached to the chassis in an elastically deformable state via fixing means.

Thus, the electric connection member and the above-mentioned terminal portions can be connected electrically to each other in a more reliable state. And since the electric connection member is elastically deformed with respect to the chassis, the height of the light source substrate to be connected to the electric connection member, when measured from the chassis, can be adjusted easily to a predetermined value, and thus the precision in assembling the light source substrate and the chassis can be improved easily.

In the above-described illumination device, the light-emitting element can be a light-emitting diode.

In this case, an illumination device that consumes less electric power and that has excellent environmental friendliness can be configured easily.

In the above-described illumination device, it is preferable that the light-emitting elements include plural kinds of light-emitting diodes whose luminescent colors are different from each other and can be mixed with white light.

In this case, the color purity of the luminescent light from each of the plural kinds of light-emitting diodes can be improved, and an illumination device having an excellent light emission quality can be configured easily.

Further, a display device of the present invention includes a display portion, and the display portion is irradiated with light from the illumination device according to any of the above-mentioned illumination devices.

Since the thus configured display device includes a compact illumination device with a simple structure so that the operations for providing the electric wiring can be simplified even when increasing the number of the light-emitting elements to be placed, a high-performance display device with a high luminance and a reduced thickness can be configured easily.

### Effects of the Invention

The present invention can provide a compact illumination device with a simple structure so that the operations for providing the electric wiring can be simplified even when increasing the number of the light-emitting elements to be placed, and a display device using the same.

### Brief Description of Drawings

[FIG. 1] FIG. 1 is an exploded perspective view showing a liquid crystal display device using an illumination device according to an embodiment of the present invention.
[FIG. 2] FIG. 2 is an exploded perspective view showing the illumination device.
[FIG. 3] FIG. 3 is a diagram for explaining configurations of main components of a liquid crystal panel as shown in FIG. 1.
[FIG. 4] FIG. 4 is a plan view showing configurations of main components of the illumination device.
[FIG. 5] FIG. 5 includes diagrams for explaining a configuration of a LED substrate as shown in FIG. 4. FIGs. 5A, 5B and 5C show respectively the mounting surface, the rear face and the side face of the LED substrate.
[FIG. 6] FIG. 6 is a perspective view showing a chassis as shown in FIG. 4.
[FIG. 7] FIG. 7A is a cross-sectional view taken along the line VIIa-VIIa in FIG. 4, and FIG. 7B is a cross-sectional view taken along the line VIIb-VIIb in FIG. 4.
[FIG. 8] FIG. 8 includes diagrams for explaining a configuration of a LED substrate used for an illumination device according to another example as technological background for understanding the invention. FIGs. 8A and 8B are diagrams respectively showing a mounting surface and a rear face of the LED substrate.
[FIG. 9] FIG. 9A is a diagram showing the side face of the LED substrate as shown in FIG. 8, and FIG. 9B is a diagram for explaining a connection state of the LED substrates.

### Description of the Invention

Hereinafter, preferred embodiments of an illumination device and a display device using the same will be explained with reference to the attached drawings. The explanation below refers to a case where the present invention is applied to a transmission-type liquid crystal display device. It should be noted also that the dimensions of the components in the respective drawings do not necessarily indicate the actual dimensions of the components, dimensional ratios among the respective components and the like.

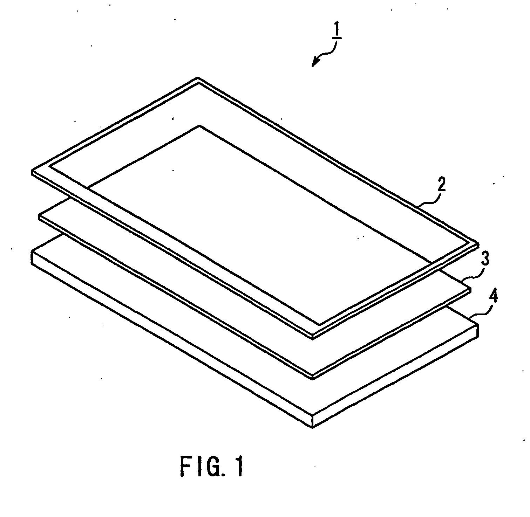

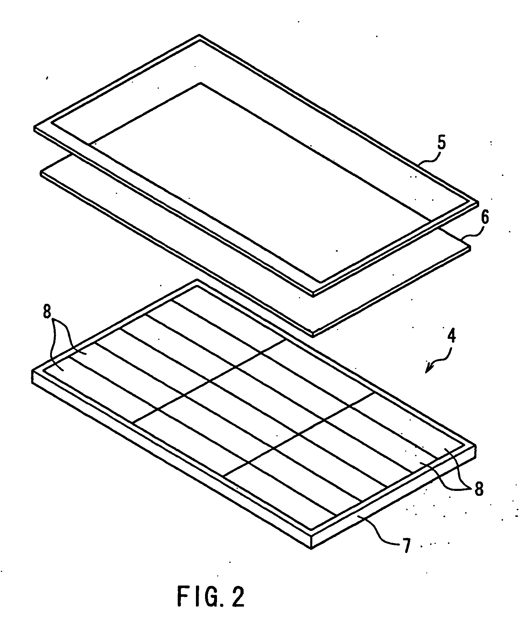

FIG. 1 is an exploded perspective view showing a liquid crystal display device that uses an illumination device according to an embodiment of the present invention. FIG. 2 is an exploded perspective view showing the illumination device. In FIG. 1, a liquid crystal display device 1 of the present embodiment includes a front frame 2, and a liquid crystal panel 3 and an illumination device 4 of the present invention provided in the back of the front frame 2 sequentially. The front frame 2 is configured to enclose the display surface of the liquid crystal panel 3. For the liquid crystal panel 3, a transmission-type liquid crystal display element having a liquid crystal layer and a pair of polarizing plates provided to interpose the liquid crystal layer (not shown) is used. The liquid crystal panel 3 forms a display portion to be irradiated with planar light (irradiation light) from the illumination device 4. In the present embodiment, the liquid crystal panel 3 and the illumination device 4 are integrated with each other to form the transmission-type liquid crystal display device 1.

As shown in FIG. 2, the illumination device 4 includes a frame 5 formed to enclose the light-emitting surface of the illumination device 4, an optical sheet 6 and a chassis 7 provided in the back of the frame 5 sequentially. And the chassis 7 contains a light-emitting diode substrate (hereinafter, this will be abbreviated as "LED substrate") as a light source substrate on which light-emitting diodes as light-emitting elements (light source) are mounted. The optical sheet 6 may include any known optical sheet materials such as a polarizing sheet, a prism (focusing) sheet and a diffusion sheet as required. With the optical sheet 6, the luminance of the illumination light from the illumination device 4 is raised suitably to improve the display performance of the liquid crystal panel 3.

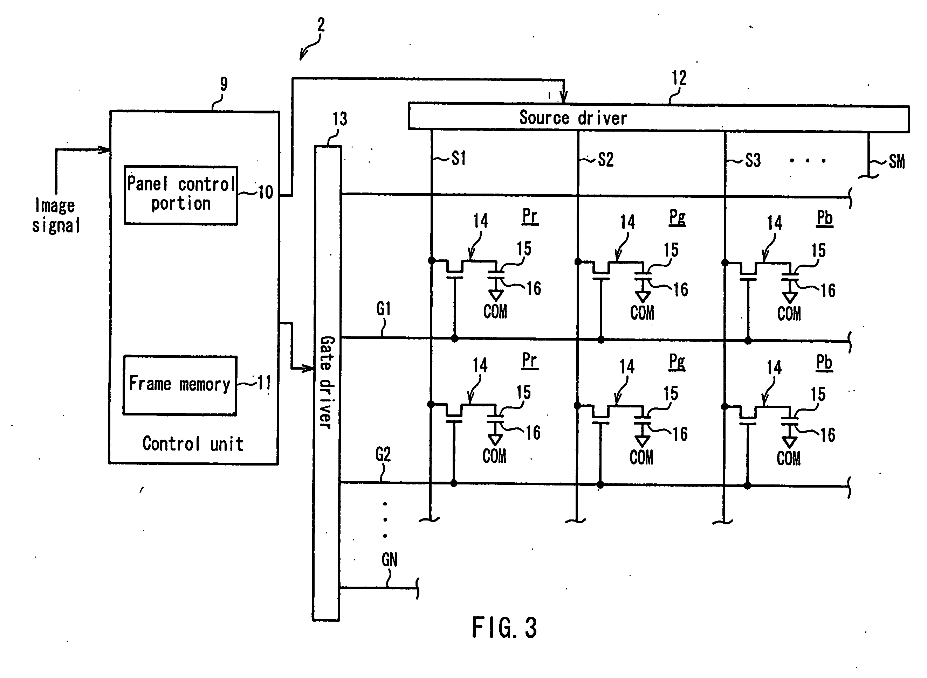

Here, the liquid crystal panel 3 will be described specifically with reference to FIG. 3.

FIG. 3 is a diagram for explaining the configurations of main components of the liquid crystal panel 3 as shown in FIG. 1.

To a control unit 9 in FIG. 3, an image signal is inputted from outside the liquid crystal display device 1 via a signal source (not shown) such as TV (receiver) or a PC. In the control unit 9, a panel control portion 10 that drives and controls a plurality of pixels placed on the liquid crystal panel 3 for each pixel and also a frame memory 11 that is configured to store display data of each frame included in the image signal, are provided. The panel control portion 10 is configured to generate respective instruction signals to a source driver 12 and a gate driver 13, on the basis of the image signal.

The source driver 12 and the gate driver 13 are drive circuits for driving each of a plurality of pixels provided in the liquid crystal panel 3. Aplurality of signal lines S1 to SM (M is an integer of 2 or more) are connected to the source driver 12, and a plurality of control lines G1 to GN (N is an integer of 2 or more) are connected to the gate driver 13. These signal lines S1 to SM and the control lines G1 to GN are arranged in a matrix, and areas for the individual pixels are formed in the areas divided in a matrix. The plural pixels include pixels Pr, Pg and Pb for red, green and blue colors. The red, green, and blue pixels Pr, Pg and Pb are arranged sequentially in parallel to the control lines G1 to GN, e.g., in the indicated order for example.

The gates of switching elements 14 provided for each pixel are connected to the control lines G1 to GN. The sources of the switching elements 14 are connected to the signal lines S1 to SM. Moreover, pixel electrodes 15 provided for each pixel are connected to the drains of the respective switching elements 14. In each of the pixels, a common electrode 16 is located opposite to the pixel electrode 15 with the liquid crystal layer that is provided in the liquid crystal panel 3 interposed between them. The gate driver 13 successively outputs gate signals for turning the gates of the corresponding switching elements 14 with respect to the control lines G1 to GN based on the instruction signals from the panel control portion 10. The source driver 12 outputs voltage signals (gradation voltages) in accordance with the luminance (gradation) of a display image to the corresponding signal lines S1 to SM based on the instruction signals from the panel control portion 10. Thereby, the transmissivity at the liquid crystal layer of the liquid crystal panel 3 is changed for each pixel, and a display image is formed on the display surface due to the illumination light from the light-emitting surface of the illumination device 4.

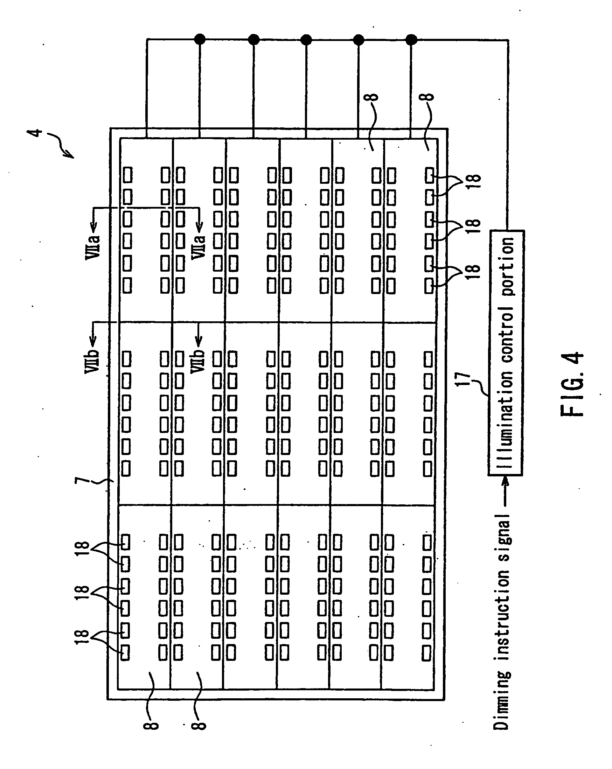

Next, the illumination device 4 will be described below with reference to FIGs. 4-7.

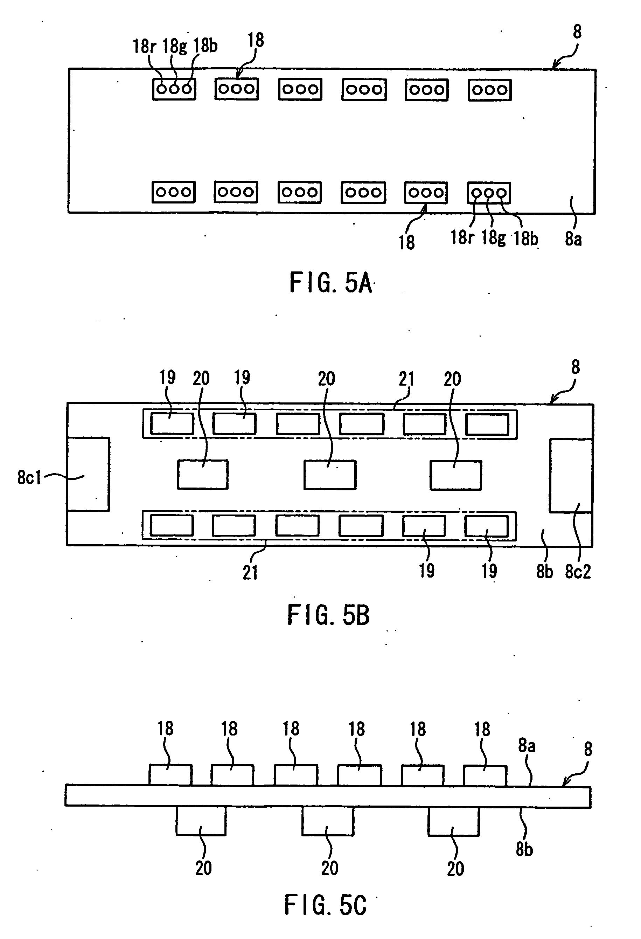

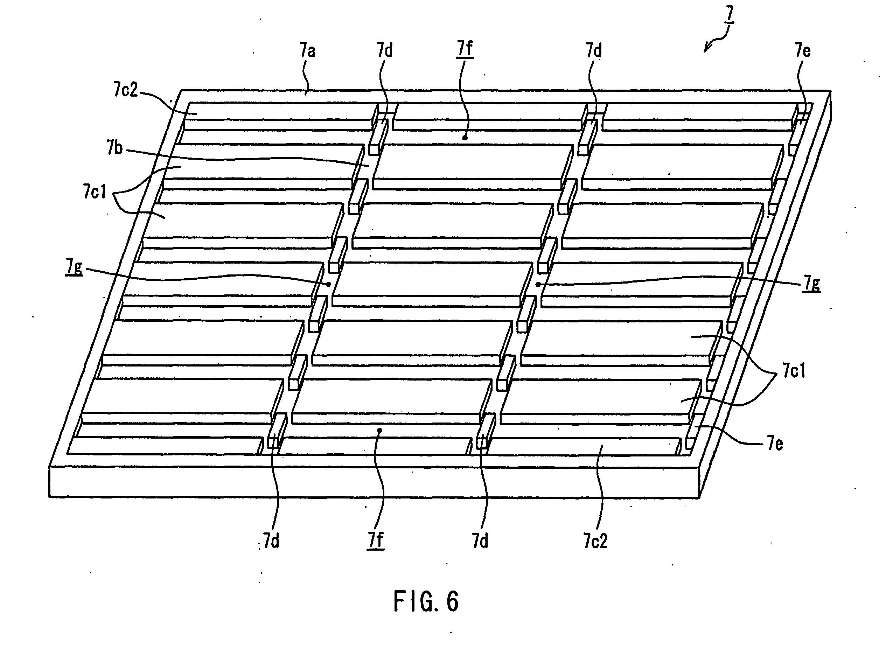

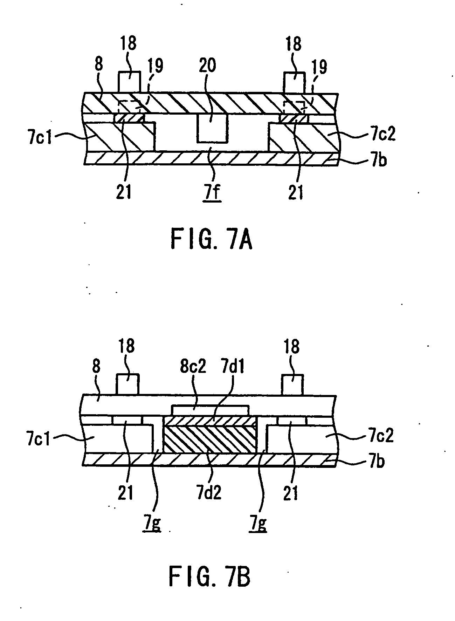

FIG. 4 is a plan view showing main components of the illumination device 4. FIG. 5 includes diagrams for explaining the configuration of the LED substrate 8 as shown in FIG. 4. FIGs. 5A, 5B and 5C are diagrams showing respectively a mounting surface 8a, a rear face 8b and a side face of the LED substrate 8. FIG. 6 is a perspective view showing the chassis 7 as shown in FIG. 4. FIG. 7A is a cross-sectional view taken along the line VIIa-VIIa in FIG. 4, and FIG. 7B is a cross-sectional view taken along the line VIIb-VIIb in FIG. 4.

As shown in FIG. 4, in the illumination device 4, 3 x 6 pieces of rectangular LED substrates 8 are provided respectively along the transverse and longitudinal directions within the chassis 7. The LED substrates 8 are contained in the chassis 7 in a state where the LED substrates 8 adjacent to each other in the transverse direction are connected electrically to each other as described below in detail. Namely, in the chassis 7, six rows of LED substrate groups each composed of three LED substrates 8 connected electrically to each other are provided. On each of the LED substrates 8, two rows of light-emitting diodes each including a plurality of, for example six light-emitting diodes 18 arranged linearly are placed, and thus twelve light-emitting diodes 18 in total are provided. In the illumination device 4, the number of the LED substrates 8 to be placed, the number of the light-emitting diodes 18 to be placed, the types and the sizes thereof and the like are selected suitably in accordance with the size of the liquid crystal panel 3, and the display performance such as the luminance and the display quality required for the liquid crystal panel 3, for example.

In the illumination device 4, for example, an illumination control portion 17 for controlling the lighting drive of the light-emitting diodes 18 on the LED substrates 8 by use of a PWM dimming or the like is provided. This illumination control portion 17 is configured so that a dimming instruction signal is inputted from a remote controller (not shown) or the like associated with the liquid crystal display device 1. The illumination control portion 17 modulates power supply to the light-emitting diodes 18 on the basis of the inputted dimming instruction signal, thereby the luminance and chromaticity of the illumination light irradiated on the liquid crystal panel 3 can be adjusted suitably.

Specifically as shown in FIG. 5, so-called three-in-one (3in1) type light-emitting diodes 18 are provided on the mounting surface 8a. The 3in1 type light-emitting diodes 18 are prepared by, for example, configuring integrally a red light-emitting diode 18r, a green light-emitting diode 18g and a blue light-emitting diode 18b that respectively emit light of red (R), green (G) and blue (B). Further on the mounting surface 8a, as shown in FIG. 5A, two rows of light-emitting diodes are placed in parallel to each other in the transverse direction. Furthermore in each row of the light-emitting diodes, six light-emitting diodes 18 are provided along a predetermined direction (transverse direction) and at a predetermined spacing. Thereby, the illumination device 4 prevents easily luminance unevenness in the illumination light to the liquid crystal panel 3, so that the light emission quality of the illumination device 4 can be improved easily In addition to that, in the LED substrate 8, it is possible to change the amount of the respective light emission from the light-emitting diodes 18r, 18g and 18b on the basis of the instruction signal corresponding to the dimming instruction signal from the illumination control portion 17 so as to modify suitably the luminance and chromaticity of the illumination light.

As shown in FIG. 5B, radiation patterns 19 are placed on the rear face 8b opposite to the mounting surface 8a of the LED substrate 8. Each of the radiation patterns 19 is provided for each light-emitting diode 18, as a radiation portion for radiating heat generated at the light-emitting diode 18. Namely, each radiation pattern 19 is arranged right back (right under) the corresponding light-emitting diode 18, and configured to transfer efficiently the heat of the light-emitting diode 18 from the mounting surface 8a to the rear face 8b via a through hole or the like penetrating the LED substrate 8 from the mounting surface 8a to the rear face 8b.

On the rear face 8b of the LED substrate 8, heat transfer tapes 21 can be attached along the transverse direction to the two rows of radiation patterns each including six radiation patterns 19 arranged linearly. The heat transfer tapes 21 are heat transfer members for transferring heat from the radiation patterns 19 to the chassis 7. For the heat transfer tapes 21, for example, a belt-like synthetic resin seals such as acrylic resin having a high thermal conductivity is used. The heat transfer tapes 21 are provided to cover the rows of radiation patterns. And the heat transfer tapes 21 convey the heat generated at the light-emitting diodes 18 to the chassis 7 so as to radiate the heat to the exterior (the details will be described below).

On the rear face 8b of the LED substrate 8, for example three LED drivers 20 are mounted to be arranged between the two rows of radiation patterns, i.e., between the two rows of light-emitting diodes mounted on the mounting surface 8a. Each of the LED drivers 20 is a driving circuit element for driving the light-emitting diode 18, and is configured with IC prepared by integrating predetermined electronic components such as a constant-current circuit for supplying a constant current to the light-emitting diode 18, a resistive element and a capacitor. Each of the LED drivers 20 is connected electrically to four light-emitting diodes 18 via for example through holes formed within the LED substrate 8 so as to drive separately the four connected light-emitting diodes 18 on the basis of the instruction signal from the illumination control portion 17.

Furthermore, on the rear face 8b of the LED substrate 8, terminal portions 8c1 and 8c2 are provided respectively at the left end portion and the right end portion parallel to each other. The terminal portions 8c1 and 8c2 are connected electrically to the LED drivers 20 via a printed circuit not shown in the drawings. The terminal portions 8c1 and 8c2 are connected electrically to the light-emitting diodes 18 directly via the through holes or the like, or indirectly through the LED drivers 20. The LED substrate 8 is configured so that the instruction signal from the illumination control portion 17 is inputted via the terminal portions 8c1 and 8c2, and at the same time, electric power is supplied from a power source not shown in the drawings.

As shown in FIG. 5C, the light-emitting diodes 18 and the LED drivers 20 are provided to protrude respectively from the mounting surface 8a and the rear face 8b of the LED substrate 8. The light-emitting diodes 18 and the LED drivers 20 are mounted on and fixed by soldering to a printed circuit placed on the corresponding mounting surface 8a and rear face 8b.

The chassis 7 is formed of a metal such as aluminum having a high thermal conductivity so as to radiate heat generated at the light-emitting diodes 18 to the exterior. Specifically, as shown in FIG. 6, the chassis 7 includes a frame 7a that composes the sidewalls of the chassis 7, and a flat base plate 7b formed integrally with the frame 7a to block one end (lower side) of the frame 7a. The chassis 7 further includes supportive portions 7c1, 7c2 for supporting the LED substrate 8, electric connection members 7d for connecting electrically two LED substrates 8 adjacent to each other in the transverse direction, and electric connection members 7e for connecting electrically the LED substrate 8 to the illumination control portion 17 and the power source. Further, on the chassis 7, six grooves 7f parallel to the transverse direction and three grooves 7g parallel to the longitudinal direction are formed. The twelve electric connection members 7d and the six electric connection members 7e are provided integrally with the base plate 7b of the chassis 7 at the intersections of the grooves 7f, 7g.

Specifically, the thickness and the material for the base plate 7b of the chassis 7 have been determined for having a desired rigidity (strength), and the rectangular supportive portions 7c1 and 7c2 are fixed onto the base plate 7b. The surface area of the supportive portion 7c1 at the light-emitting surface side (upper side) is set to be as approximately twice as the surface area of the supportive portion 7c2. The supportive portion 7c1 is configured to support two of the LED substrates 8 provided adjacent to each other in the longitudinal direction. The highest and lowest rows of supportive portions 7c2 are set to support respectively the highest and lowest rows of LED substrates 8. Further in the chassis 7, the grooves 7f are formed between two supportive portions 7c1 adjacent to each other in the longitudinal direction and also between the supportive portion 7c1 and the supportive portion 7c2 adjacent to each other in the longitudinal direction, thereby each of the LED substrates 8 is supported by the corresponding supportive portions 7c1 and 7c2 in a state where the LED driver 20 is arranged within the groove 7f.

Namely, in the example as shown in FIG. 7A, in a state where the LED driver 20 is contained in the groove 7f, the LED substrate 8 is disposed on the supportive portions 7c1 and 7c2 via the heat transfer tapes 21 and supported. Further, the heat transfer tapes 21 have been provided with elasticity as well as a heat transfer property, and the heat transfer tapes 21 are configured to improve the adherence to the radiation patterns 19 of the LED substrate 8 and the supportive portions 7c1, 7c2. The heat transfer tapes 21 have adherence on the both faces, namely, its surface opposing the LED substrate 8 and its surface opposing the supportive portions 7c1, 7c2. Thereby, the heat transfer tapes 21 will get in contact on the surface reliably and stably with the rear face 8b of the LED substrate 8 and also the surfaces of the supportive portions 7c1, 7c2.

As mentioned above, since the heat transfer tapes 21 are configured to get in contact on the surfaces reliably and stably with the LED substrate 8 and with the chassis 7, while improving the adherence to the LED substrate 8 and the chassis 7. Therefore, in the illumination device 4 of the present embodiment, it is possible to suppress considerably degradation in the efficiency of the thermal conductivity due to the heat transfer tapes 21 from the LED substrate 8 to the chassis. As a result, in the illumination device 4 of the present embodiment, it is possible to radiate the heat generated at the light-emitting diodes 18 to the exterior of the chassis 7 quickly and more efficiently via the radiation patterns 19, the heat transfer tapes 21, the supportive portions 7c1, 7c2, and the base plate 7b. Therefore, variation in the light emission amount of the light-emitting diodes 18, which is caused by the variation in the ambient temperature, can be prevented in the illumination device 4 of the present embodiment, and thus an illumination device 4 with excellent light emission quality can be provided in an easier manner

The configuration is not limited to the above-described one, but the radiation patterns 19 of the LED substrate 8 and the supportive portions 7c1, 7c2 can be made contact directly with each other without use of the heat transfer tapes 21. Alternatively, the heat transfer tapes 21 can be replaced by a thermally conductive adhesive that will be cured to form an elastic rubber. Also it is possible to place a heat sink or the like on the base plate 7b of the chassis 7 so as to improve the radiation capability of the chassis 7, or to place a radiation mechanism on the back side of the base plate 7b. The radiation mechanism will be for example a fan or a water jacket through which water (coolant) is circulated, which has a capability for a forced cooling of heat of the light-emitting diodes.

Also in the chassis 7, the twelve electric connection members 7d are attached integrally to the base plate 7b of the chassis 7 so that each of the electric connection members 7d is arranged between two of the LED substrates 8 adjacent to each other in the transverse direction. Namely as shown in FIG. 6, six electric connection members 7d are provided linearly at a predetermined spacing in the left and center grooves 7g among the three grooves 7g formed in parallel to the longitudinal direction.

At each of the electric connection members 7d, as shown in FIG. 7B, a metal film 7d1 and a supporter 7d2 are provided. The metal film 7d1 is in contact with the terminal portion 8c2 of the LED substrate 8 for electric conduction, and the supporter 7d2 is formed of an elastic material such as a rubber and integrated with the metal film 7d1 so as to support the metal film 7d1. The supporter 7d2 is attached to the base plate 7b via a fixing means (not shown) such as a screw or an adhesive, and the respective electric connection members 7d are attached integrally to the base plate 7b of the chassis 7 in an elastically deformable state. Further, since terminal portions 8c1, 8c2 of two LED substrates 8 adjacent to each other in the transverse direction are disposed on the metal film 7d1 at each of the electric connection members 7d, the LED substrates 8 are configured to be electrically connectable to each other.

The six electric connection members 7e are placed linearly at a predetermined spacing within the right groove 7g in FIG. 6. Similarly to the case of the electric connection members 7d, the respective electric connection members 7e are attached integrally to the base plate 7b of the chassis 7 in a state of being insulated electrically from the frame 7a and the base plate 7b and in an elastically deformable state with respect to the base plate 7b. One end of an FPC (not shown) is connected electrically to each of the electric connection members 7e while the other end of the FPC is connected to the illumination control portion 17 and the power source, thereby an output of the instruction signal and power supply to the LED substrate 8 are carried out.

In the thus configured illumination device 4 of the present embodiment, terminal portions 8c1, 8c2 connected electrically to the light-emitting diode (light-emitting element) 18 and the LED driver (driving circuit element) 20 are provided respectively at the left end portion and the right end portion that are parallel to each other on the rear face 8b opposite to the mounting surface 8a of each of the plural LED substrates (light source substrates) 8. In the illumination device 4, further the electric connection member 7d that can be connected electrically to the terminal portions 8c1, 8c2 of the LED substrate 8 is provided in the chassis 7. Thereby in the illumination device 4 of the present embodiment, unlike the above-mentioned conventional example, it is possible to connect electrically a plurality of LED substrates 8 without providing (wiring) an electric wiring such as a signal line or electric power line for every LED substrate 8 even when increasing the required numbers of LED substrates 8 in accordance with the increase in the number of the light-emitting diodes 18 to be placed. Therefore in the illumination device 4 of the present embodiment, even when increasing the number of the light-emitting diodes 18 to be placed in accordance with the increase in the screen surface area or the like of the liquid crystal display device 1, operations for providing the electric wiring can be simplified, unlike the conventional example. Furthermore, since the install space for placing the electric wiring can be minimized according to the present embodiment, a compact illumination device 4 with a simple structure can be provided.

In the present embodiment, a compact illumination device 4 with a simple structure is used so that the operations for providing electric wiring can be simplified even when the number of the light-emitting diodes 18 to be placed is increased as mentioned above. Therefore, a high performance liquid crystal display device 1 with a high luminance and a reduced thickness can be configured easily.

In the illumination device 4 of the present embodiment, two adjacent LED substrates 8 can be connected electrically by disposing the terminal portion 8c1 of one of the LED substrates 8 and the terminal portion 8c2 of the other LED substrate 8 on the electric connection member 7d. As a result, the illumination device 4 can be assembled easily. Moreover, since the electric connection member 7d provided in the chassis 7 is used, each of the plural LED substrates 8 can be positioned easily, thereby the LED substrates 8 can be assembled in the chassis 7 easily and precisely. As a result, in the present embodiment, an illumination device 4 and a liquid crystal display device 1 with excellent productivity can be provided.

Furthermore, in the illumination device 4 of the present embodiment, the LED substrates 8 are connected electrically to each other without using any electric wirings such as FPC or any special connectors. Therefore, as shown in FIG. 4, a plurality of LED substrates 8 can be contained in the chassis 7 without causing a dead space, and thus upsizing of the illumination device 4 can be prevented easily.

In the present embodiment, the electric connection members 7d, 7e are provided integrally in the chassis 7 in an elastically deformable state, and thus the electric connection to the terminal portions 8c1, 8c2 can be provided in a more reliable manner. Moreover, since the respective electric connection members 7d, 7e can be deformed elastically with respect to the chassis 7, even when fixing the LED substrates 8 to the chassis 7 by using a fixing means such as the screw, it is possible to adjust easily the height of the LED substrates 8 to be connected via the electric connection members 7d, 7e, which is measured from the base plate 7b of the chassis 7, to the predetermined value. As a result, in the illumination device 4 of the present embodiment, the assembly precision between the LED substrates 8 and the chassis 7 can be improved easily.

The electric connection members 7d, 7e can be configured to be detachable from the chassis 7.

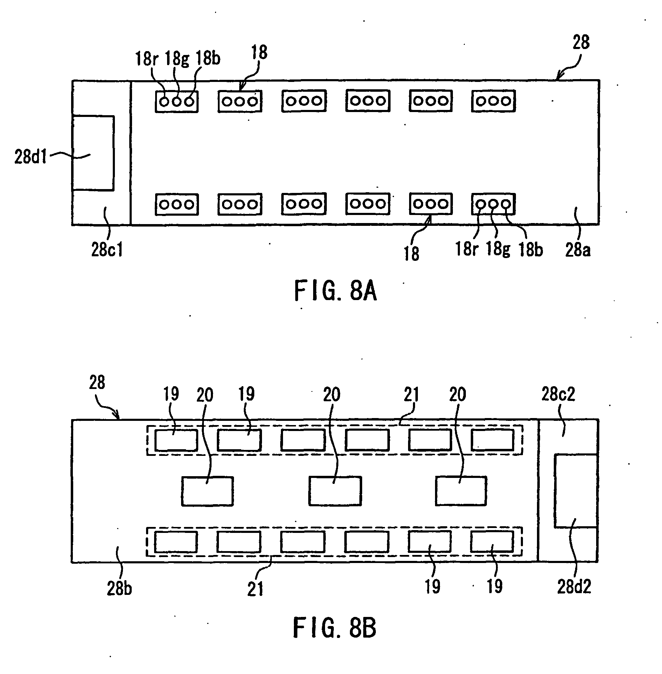

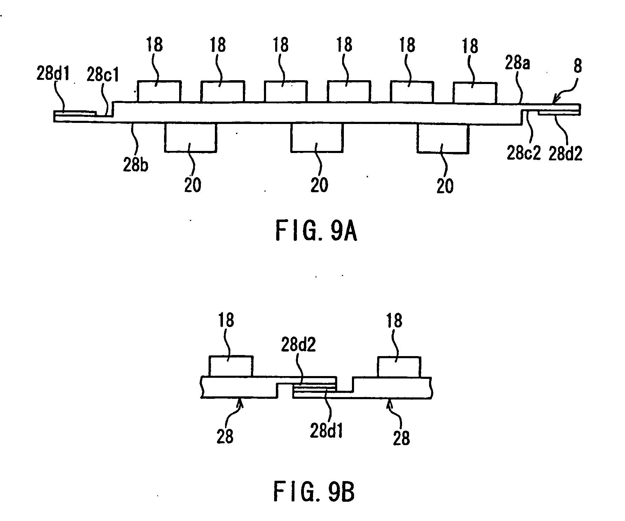

FIG. 8 includes diagrams for explaining a configuration of a LED substrate used for an illumination device according to another example showing technological background for understanding the invention. FIGs. 8A and 8B show respectively the mounting surface and the rear face of the LED substrate. FIG. 9A is a diagram showing the side face of the LED substrate as shown in FIG. 8, and FIG. 9B is a diagram for explaining the connection state of two of the LED substrates. In the drawings, the present example is distinguished from the previously described embodiment mainly in that the terminal portions are provided at the mounting surface and the rear face of the LED substrate so as to configure the two IED substrates to be electrically connectable to each other without interposing an electric connection member. It should be noted that components common to those in the previously described embodiment are assigned with the identical reference signs in order to avoid duplicated explanation.

Namely, as shown in FIG. 8A, a stepped portion 28c1 is formed at the left end portion of the mounting surface 28a of one of the light-emitting diodes (LED substrates) 28 of the present example, and on this stepped portion 28c1, a terminal portion 28d1 connected electrically to the light-emitting diode 18 and the LED driver 20 is provided.

Meanwhile, as shown in FIG. 8B, a stepped portion 28c2 is formed at the right end portion of the rear face 28b of the LED substrate 28. On the stepped portion 28c2, a terminal portion 28d2 connected electrically to the light-emitting diode 18 and the LED driver 20 is provided.

As shown in FIG. 9A, the stepped portions 28c1, 28c2 are formed respectively by notching the mounting surface 28a and the rear face 28b so as to have rectangular cross sections. Further in the present example, in a case of electrically connecting adjacent two LED substrates 28, the terminal portion 28d2 of the left LED substrate 28 and the terminal portion 28d1 of the right LED substrate 28 are connected directly to each other, as shown in FIG. 9B. On the LED substrates 28, when the two LED substrates 28 are connected to each other in this manner and attached to the chassis 7 with the above-mentioned fixing means, the height of each from the base plate 7b is adjusted to a predetermined value similarly to the previously described embodiment, thereby the distance to the light-emitting surface of the respective LED substrates 28 is set to be uniform.

According to the above-mentioned configuration, the present example can provide effects and functions similar to those in the previously described embodiment. In addition to that, since the plural LED substrates 28 are connected directly to each other without using an electric connection member in the present example, the number of the components of the illumination device 4 and of the liquid crystal display device 1 can be decreased, and furthermore, an illumination device 4 with a simple structure can be provided more easily.

The above embodiment is shown merely for an illustrative purpose and is not limiting. The technical range of the present invention is defined by the claims, and all the changes within a range equivalent to the configuration recited in the claims also are included in the technical range of the present invention.

For example, although the case where the present invention is applied to a transmissive liquid crystal display device has been described above, the application of the illumination device of the present invention is not limited to this type. For example, the illumination device of the present invention can be applied to a variety of display devices including a non-luminous display portion that utilizes light from a light source to display information such as images and texts. More specifically, the illumination device of the present invention can be preferably applied to a semi-transmissive liquid crystal display device and a projection type display device such as a rear projector in which light bulbs are used in the liquid crystal panel.

In addition to the examples described above, the present invention can be preferably applied to an X illuminator used to irradiate x-ray radiographs with light, a light box that irradiates negative images or the like with light to make them more visually identifiable or an illumination device of a light-emitting device for illuminating billboards or ads placed on walls in station premises.

Still further, the above explanation refers to the case of using LED substrates each having two rows of light-emitting diodes each including six light-emitting diodes arranged linearly and using six rows of LED substrate groups each composed of three LED substrates connected electrically to each other. However, the configuration of the light source substrates (including the number of the light-emitting elements to be placed and the type), the number of the light source substrates and the method of connection or the like are not limited to the above description as long as a plurality of light source substrates each having a plurality of light-emitting elements mounted on the mounting surface are provided and the plural light source substrates are provided in a state where adjacent light source substrates are connected electrically to each other.

It should be noted however, that it is preferable to provide terminal portions on two end portions parallel to each other on the light source substrates that will be connected electrically to a light-emitting elements and to interpose the electric connection members, or to connect directly the terminal portions of separate light source substrates, because two light source substrates can be connected electrically to each other in a reliable manner without providing an electric wiring such as FPC or a special connector, as mentioned respectively in the above-described embodiments.

Moreover, it is preferable to use light-emitting diodes for the light-emitting elements as in the above-mentioned respective embodiments, since an illumination device that consumes less electric power and that has an excellent environmental friendliness can be configured

Further the case of using the plurality of 3-in-1 light-emitting diodes including R, G and B light-emitting diodes has been described above. However, light-emitting diodes that can be used in the present invention are not limited to this type and individual R, G and B light-emitting diodes, white (W) light-emitting diodes that emit white light or so-called 4-in-1light-emitting diodes including four light-emitting diodes such as R, G, B and W or G, R, G and B may also be used. Further, light-emitting diodes other than R, G, B and W may also be added. In this case, although it is necessary to add colors to the pixels of the liquid crystal panel, a wider range of colors can be reproduced. Examples of the colors to be added include yellow and magenta.

However, as in the above embodiment, it is preferable to use a plurality of types (e.g., RGB) of light-emitting diodes whose emission light colors are different from each other but they can be mixed into white light than to use white light-emitting diodes in terms of improving the color purities of the corresponding emission colors of the plurality of types of light-emitting diodes. Furthermore, an illumination device with excellent light-emitting quality and, by extension, a display device with excellent display quality can be achieved with ease.

The case of achieving a direct-type illumination device has been described above. However, the application of the present invention is not limited to this type and can be applied to an edge-light type illumination device in which a single light guiding plate is placed on the lower side of the light-emitting surface of the illumination device and a plurality of light source substrates are arranged in parallel to at least one of the four sides surrounding the light guiding plate or to other type of illumination device such as a tandem-type illumination device in which light guiding plates are provided by the light-emitting element. Further, even when applying the present invention to a tandem-type illumination device in which optical components such as light guiding plates need to be placed on the mounting surface of a light source substrate, electronic components other than light-emitting elements, such as the above-mentioned connector, are not placed on the mounting surface of the light source substrate, as shown in FIG. 5. Thus, the optical components can be placed easily and the thickness of the illumination device can be reduced with ease.

In addition to the above examples, the present invention can be applied to, for example, an illumination device that is configured to be capable of a backlight scanning drive for illuminating a plurality of light-emitting elements sequentially in accordance with an information display on a liquid crystal panel; and an illumination device that has a plurality of illumination areas being set in accordance with the display area at the liquid crystal panel side and that is capable of an area active backlight drive for illuminating the light-emitting elements in the illumination areas for each illumination area.

### Industrial Applicability

The present invention can be applied preferably to a compact illumination device with a simple structure for simplifying operations for providing an electric wiring even in a case of increasing the number of the light-emitting elements to be placed, and also a high-performance display device using the illumination device.

## Claims

1. An illumination device (4) comprising a plurality of light-emitting elements (18) and a plurality of light source substrates (8) each having a mounting surface (8a) on which light-emitting elements (18) are mounted, the light source substrates (8) being arranged along a transverse and a longitudinal direction,
wherein the light source substrates (8) are provided in a state where light source substrates adjacent along said transverse direction are connected electrically to each other,
wherein terminal portions (8c1, 8c2) electrically connected to the light-emitting elements (18) are provided at two parallel end portions of each light source substrate (8),
wherein the illumination device (4) comprises a chassis (7) that contains the light source substrates (8),
the two terminal portions (8c1, 8c2) are provided respectively at the two end portions on the rear face (8b) opposite to the mounting surface (8a) of each light source substrate (8), and
electric connection members (7d, 7e) to be connected electrically to respective terminal portions (8c1, 8c2) of light source substrates (8) adjacent along said transverse direction are provided on the chassis (7),
**characterized in that** the electric connection members (7d, 7e) are attached to the chassis (7) via fixing means, at least a portion of the electric connection members being formed of an elastic material.

2. The illumination device (4) according to claim 1, wherein the plural light-emitting elements (18) are placed on the mounting surface (8a) of the light source substrate (8) along a predetermined direction and at a predetermined spacing.

3. The illumination device (4) according to claim 1 or 2, wherein the light-emitting elements (18) are light-emitting diodes.

4. The illumination device (4) according to claim 1 or 2, wherein the light-emitting elements (18) comprise plural kinds of light-emitting diodes (18r, 18g, 18b) whose luminescent colors are different from each other and can be mixed with white light.

5. A display device (1) comprising a display portion (3), wherein the display portion is irradiated with light from the illumination device (4) according to any of claims 1 to 4.

## Patentansprüche

1. Beleuchtungsvorrichtung (4), umfassend eine Mehrzahl von lichtemittierenden Elementen (18) und eine Mehrzahl von Lichtquellensubstraten (8), die jeweils eine Montageoberfläche (8a) aufweisen, an der lichtemittierende Elemente (18) montiert sind, wobei die Lichtquellensubstrate (8) entlang einer Quer- und einer Längsrichtung angeordnet sind,
wobei die Lichtquellensubstrate (8) in einem Zustand vorgesehen sind, wo Lichtquellensubstrate, die entlang der Querrichtung angrenzend bzw. benachbart sind, elektrisch miteinander verbunden sind,
wobei Anschlussabschnitte (8c1, 8c2), die elektrisch mit den lichtemittierenden Elementen (18) verbunden sind, an zwei parallelen Endabschnitten jedes Lichtquellensubstrats (8) vorgesehen sind,
wobei die Beleuchtungsvorrichtung (4) ein Chassis (7) umfasst, das die Lichtquellensubstrate (8) enthält,
die beiden Anschlussabschnitte (8c1, 8c2) jeweils an den beiden Endabschnitten an der hinteren Fläche (8b) gegenüberliegend bzw. entgegengesetzt zu der Montageoberfläche (8a) jedes Lichtquellensubstrats (8) vorgesehen sind, und
elektrische Verbindungsglieder (7d, 7e), die elektrisch mit jeweiligen Anschlussabschnitten (8c1, 8c2) von Lichtquellensubstraten (8), die entlang der Querrichtung angrenzend bzw. benachbart sind, zu verbinden sind, an dem Chassis (7) vorgesehen sind,
**dadurch gekennzeichnet, dass** die elektrischen Verbindungsglieder (7d, 7e) über Fixier- bzw. Befestigungsmittel an dem Chassis (7) angebracht sind, wobei zumindest ein Abschnitt bzw. Teil der elektrischen Verbindungsglieder aus einem elastischen Material gebildet ist.

2. Beleuchtungsvorrichtung (4) nach Anspruch 1, wobei die mehreren lichtemittierenden Elemente (18) entlang einer vorbestimmten Richtung und mit einem vorbestimmten Abstand an der Montageoberfläche (8a) des Lichtquellensubstrats (8) platziert sind.

3. Beleuchtungsvorrichtung (4) nach Anspruch 1 oder 2, wobei die lichtemittierenden Elemente (18) lichtemittierende Dioden bzw. Leuchtdioden sind.

4. Beleuchtungsvorrichtung (4) nach Anspruch 1 oder 2, wobei die lichtemittierenden Elemente (18) mehrere Arten von lichtemittierenden Dioden (18r, 18g, 18b) umfassen, deren Lumineszenzfarben unterschiedlich voneinander sind und mit Weißlicht gemischt werden können.

5. Anzeigevorrichtung (1), umfassend einen Anzeigeabschnitt (3), wobei der Anzeigeabschnitt mit Licht von der Beleuchtungsvorrichtung (4) nach einem der Ansprüche 1 bis 4 bestrahlt wird.

## Revendications

1. Dispositif d'illumination (4) comprenant une pluralité d'éléments émettant de la lumière (18) et une pluralité de substrats source de lumière (8) ayant chacun une surface de montage (8a) sur laquelle les éléments émettant de la lumière (18) sont montés, les substrats source de lumière (8) étant agencés le long d'une direction transversale et longitudinale,
dans lequel les substrats source de lumière (8) sont prévus dans un état où des substrats source de lumière adjacents le long de ladite direction transversale sont connectés électriquement les uns aux autres,
dans lequel des portions terminales (8c1, 8c2) connectées électriquement aux éléments émettant de la lumière (18) sont prévues au niveau de deux portions d'extrémité parallèles de chaque substrat source de lumière (8),
dans lequel le dispositif d'illumination (4) comprend un châssis (7) qui contient les substrats source de lumière (8),
les deux portions terminales (8c1, 8c2) sont prévues respectivement au niveau des deux portions d'extrémité sur la face arrière (8b) en face de la surface de montage (8a) de chaque substrat source de lumière (8), et
des éléments de connexion électrique (7d, 7e) devant être connectés électriquement à des portions terminales respectives (8c1, 8c2) de substrats source de lumière (8) adjacents le long de ladite direction transversale sont prévus sur le châssis (7),
**caractérisé en ce que** les éléments de connexion électrique (7d, 7e) sont reliés au châssis (7) par le biais de moyens de fixation, au moins une portion des éléments de connexion électrique étant formée en un matériau élastique.

2. Dispositif d'illumination (4) selon la revendication 1, dans lequel les éléments émettant de la lumière (18) sont placés sur la surface de montage (8a) du substrat source de lumière (8) le long d'une direction prédéterminée et à un espacement prédéterminé.

3. Dispositif d'illumination (4) selon la revendication 1 ou 2, dans lequel les éléments émettant de la lumière (18) sont des diodes électroluminescentes.

4. Dispositif d'illumination (4) selon la revendication 1 ou 2, dans lequel les éléments émettant de la lumière (18) comprennent plusieurs types de diodes électroluminescentes (18r, 18g, 18b) dont les couleurs luminescentes sont différentes les unes des autres et peuvent être mélangées à de la lumière blanche.

5. Dispositif d'affichage (1) comprenant une portion d'affichage (3), dans lequel la portion d'affichage est irradiée de lumière provenant du dispositif d'illumination (4) selon l'une quelconque des revendications 1 à 4.
